# EUROPEAN PATENT APPLICATION

(11) **EP 2 110 931 A2**
(43) Date of publication of application: **21.10.2009**
(21) Application number: 09157684.3
(22) Date of filing: 09.04.2009
(51) Int. Cl.: H02K 9/19

(54) **Cooling element for an electrical machine**

(30) Priority: 18.04.2008 FI 20080295
(71) Applicant: ABB Oy, 00380 Helsinki (FI)
(72) Inventor: Mantere, Juhani, 04300 Tuusula (FI)

(57) **Abstract**

In an electrical machine cooling element according to the invention, the electrical machine (25) comprises a rotor and a stator (26). In the electrical machine (25), the outer surface (14) of the stator is divided into sections (22a-b) equal to the length (L) of the stator. The cooling element (1) comprises a minimum of two modules (2), each module (2) comprising adjacent pipes (3a-c) substantially parallel to the stator's longitudinal axis, the ends of the pipes being joined using connecting parts (4a-b). The cooling agent flows in opposing directions (F_{d}) in the adjacent pipes, and the width of the module (2) is equal to the width (Wu) of the outer surface section (22a-b) at most.

## Description

### Scope of the invention

The object of the invention is a cooling element for an electrical machine according to the preamble part of Claim 1, and a stator for an electrical machine, cooled with the cooling element, according to the preamble part of Claim 11.

### Prior art

Electrical machines are cooled to remove the heat generated within them. Heat is mostly generated in the active part of the electrical machine, the stator and the rotor, by magnetic and resistance losses.

Copper losses are created in the resistive conductors of electrical machine windings when part of the electric current transforms into heat. The variable magnetic flux causes iron losses in the iron parts of the motor and generator, including eddy-current losses and hysteresis losses.

In addition, mechanical losses occur in rotating electrical machines, such as bearings, or as turbulence on the rotor surface.

Heat losses thus created in machines must be conducted away to prevent the machines from heating until a balance is reached between the generated heat energy and the heat energy being conducted away from the machine.

Electrical machines are designed to comply with a particular insulation class. Winding insulation is selected to allow a reasonable lifetime in the chosen insulation class. If the electrical machine should operate in an overheated condition due to overload or deterioration of the cooling system, the insulation lifetime will decrease rapidly.

Air is normally used as the coolant in small electrical machines of less than 1...2 MW. In larger electrical machines, liquid coolant is used; the most common liquid coolant is water. In many arrangements, the actual coolant is air that is cooled using water.

In liquid-cooled electrical machines, the cooling agent does not come into direct contact with the cooled components. The cooling agent is led into the electrical machine in closed pipes or channels, and removed from the machine when warmed up. The cooling circuit is either a closed circuit, in which case the heated cooling agent is cooled in a heat exchanger before flowing back into the electrical machine, or an open circuit, in which case the heated cooling agent is removed from the system.

Compared to air cooling on the outer surface, the heat transfer efficiency of liquid cooling is considerably better. However, the disadvantages of liquid cooling include risks of leakage and corrosion as well as a complicated structure that is expensive in terms of manufacturing technique.

### Description of invention

The purpose of the present invention is to create a cooling element for electrical machines and an electrical machine stator to be cooled with the cooling element. In order to achieve this, the invention is characterized by the features specified in the characteristics sections of Claims 1 and 11. Some other preferred embodiments of the invention have the characteristics specified in the dependent claims.

In an electrical machine cooling element according to the invention, the electrical machine comprises a rotor and a stator. In the electrical machine, the outer surface of the stator is divided into sections equal to the length of the stator. The cooling element comprises at least of two modules, each module comprising adjacent pipes substantially parallel to the stator's longitudinal axis, the ends of the pipes being connected to each other using connecting parts. The cooling agent flows in opposing directions in the adjacent pipes, and the width of the module is equal to the width of the outer surface section at most.

In an electrical machine stator according to the invention, the outer surface of the stator is divided into sections equal to the length of the stator. The stator is cooled by at least one cooling element. The cooling element comprises at least of two modules. A module comprises adjacent pipes substantially parallel to the stator's longitudinal axis, the ends of the pipes being connected to each other using connection parts. The cooling agent flows in opposing directions within adjacent pipes. The width of the module is equal to the width of the outer surface section at most. The module is located on the outer surface of the stator.

The cooling element may be placed inside the electrical machine, on the outer surface of the stator. The stator usually comprises thin sheets that are attached together to form sheet packs, using connection bars and welding for example. The cooling element module is installed in thermally-conducting contact with the stator outer surface, on the outer surface of the sheet pack, with the bottom surface of the module facing the stator. This provides efficient heat transfer by conduction from the main heat source, the stator winding, through the sheet pack to the cooling element. From the cooling element, the pipes of the module, heat will transfer to the cooling agent flowing inside the pipes. In the cooling element, the cooling agent does not come to direct contact with the cooled components.

When the cooling element is placed in direct contact with the heat-producing components of the electrical machine, a better cooling efficiency can be achieved than when using air cooling on the outer surface.

In a preferred embodiment of the invention, the shape of the bottom surface of the module follows the shape of the stator outer surface. The stator is usually cylindrical, with a curved outer surface. The most efficient heat transfer from the stator outer surface to the pipe surfaces can be achieved by bending or pressing the cooling element, and its modules, to follow the curve of the stator outer surface. Heat-conducting paste may be applied between the bottom surface of the cooling element and the stator outer surface to narrow the air gaps to increase the heat transfer efficiency.

According to an embodiment of the invention, the module has an even number of pipes. In such a module, the required cooling agent connections, one for cooling agent flowing into the module and another for returning cooling agent, are located at the same end of the stator.

According to another embodiment of the invention, the pipe in the cooling element module has a substantially quadrangular cross-section, with the longest side of the pipe cross-section against the bottom surface of the module. This will increase the contact surface between the module pipe and the stator outer surface. The quadrangular shape can be achieved, for example, by rolling the pipes flat, resulting in the width of the pipe cross-section being greater than its height.

According to some other embodiments of the invention, the pipe within the coolant element module is substantially triangular or semi-circular, with the longest side of a triangular pipe and the straight side of a semi-circular pipe against the bottom surface of the module.

According to another embodiment of the invention, the connection parts of the cooling element module are bent in the radial direction, and two adjacent connecting parts partly overlap in the radial direction of the stator. The connecting parts are bent alternately upwards and downwards, and they interlock. This allows the pipes to be placed closer to each other as the width of the connecting part joining two pipes sets no minimum distance for the pipes. If the connecting part of the module is, for example, a curved pipe, the minimum bending radius of the pipe will no longer set limitations for the pipe pitch. A dense pipe distribution will produce more efficient cooling; instead of one sparsely distributed pipe turn, for example, two dense turns can be used.

As leakage protection, a leakage catch casing can be installed around the entire length of the pipes. The casing is substantially in contact with the top and bottom surfaces of the module pipes to minimize the required space and to improve the heat transfer capacity. The catch casing gathers any water leaking from the straight parts of the pipes.

A leakage catch basin can be installed between the connecting parts of the cooling element module and the stator coil ends. The leakage catch basin is installed between the connecting parts of the module and the coil ends for the section in which the module is higher than the coil ends in a vertical direction. When the module is below the coil ends in a vertical direction, a catch basin is only needed to conduct the water to one location. The catch basins can be connected to an alarm system and water reaching a certain threshold will trigger an alarm.

The cooling element can be fixed to the outer surface of the stator. Other means can also be used to attach the cooling element, such as utilizing the frame plate or frame beams supporting the stator. For example, one or more tightening elements can be installed between the frame plate and the cooling element.

The connecting parts of the cooling element module are preferably left open for air circulation. The cooling agent circulating in the cooling element will then also cool the air inside the electrical machine. A liquid-cooled cooling element can thus also be used as an additional cooling device for the air cooling of the electrical machine, if air cooling is required for example for the cooling of the rotor or the coil ends of the stator winding.

With the present invention, several significant benefits and improvements will be achieved, compared to earlier solutions. The cooling element has leak protection and a simple structure, and it can be cost-effectively manufactured.

Possible cooling agents to be used in the cooling element include water and oil.

The stator according to the invention is a cost-efficient choice for example for a wind power station generator of large diameter, installed in a difficult geographical location with difficult weather conditions. Due to the modular structure, the cooling element is easy to service or replace. The modular cooling element covering the perimeter of the stator can be installed or replaced one module at a time. Should the cooling element fail, the entire cooling element does not have to be detached from the outer surface of the stator; only the module requiring repair is replaced.

As the cooling element does not comprise one solid piece around the entire outer perimeter of the stator, it is easy to handle. The greater the number of modules, the smaller the external dimensions of one module. One or more modules can be installed on one section of the circumference of the stator's outer surface. Small modules are easier to transport and handle.

The modules of a cooling element installed in parts are finally connected either in series or in parallel, or in series and in parallel. When the modules are connected in series the same cooling agent flows through all the modules. When the modules are connected in series and in parallel the cooling element comprises a plurality of modules. At least two of the plurality of modules are connected in series and at least two of the plurality of modules are connected in parallel.

It is advantageous for the stator cooling that the cooling is even for the entire outer surface area of the stator. Then the temperature and flow rate of the cooling agent entering the module will not substantially differ between the modules.

The outer surface of the stator should also be evenly covered with modules, with at least one module on each section of the outer surface. In terms of manufacturing technique, it is advantageous that all modules be fundamentally similar.

A stator according to the invention is a stator sheet pack with a simple structure and a relatively firm frame. Efficient cooling can be achieved with cooling elements installed directly on the stator surface. The structure of the stator is simple compared to an air-cooled stator with radial ducts built into the stator core for the cooling air flow.

According to an embodiment of the invention, connecting bars are used to divide the outer surface of the stator into sections equal to the length of the stator. The stator comprises thin sheets. The sheets are tied into one stator core using connecting bars the length of the stator core, placed on the outer surface of the core parallel to the axis of the core and fixed to the stator sheets and/or stator end compression plates for example by welding. The connecting bars maintain compression in the stator core. In a small stator there can be, for example, six connecting bars evenly distributed on the stator outer surface, dividing the stator outer surface into six sections. In a large stator there can be, for example, 24 connecting bars, forming 24 sections on the outer surface.

According to another embodiment of the invention, the stator outer surface is divided into sections equal to the length of the stator by using a block structure for the stator, in which case the width of the stator outer surface section is equal to the width of the stator block.

A block structure can be used for the stator when the diameter of the stator is so great that manufacturing in one piece is no longer possible or advantageous due to limitations in transportation, installation, manufacturing or other such processes. The blocks are joined to each other using connecting devices such as bolts and nuts. The number of stator blocks can be, for example, 12, and the width of each block 1.3 m.

According to yet another embodiment of the invention, the stator is cooled using two cooling elements. The cooling elements are placed consecutively in the longitudinal direction of the stator. At least two consecutive modules will thus be placed on one stator-length section of the outer surface.

### Figures

In the following, the invention will be described in more detail with the help of certain embodiments by referring to the enclosed drawings, where
- Figure 1.a)-c) illustrates a cooling element module;
- Figure 2.a)-c) illustrates a cooling element module with an increased number of pipes;
- Figure 3. is a partial illustration of another cooling element;
- Figure 4. is a partial illustration of a further example the cooling element;
- Figure 5. illustrates the cooling element of Fig. 3 installed in a stator of an electrical machine;
- Figure 6. illustrates the cooling element like shown in Fig. 3 installed in an electrical machine, seen from the side of the electrical machine;
- Figure 7. illustrates in perspective presentation a cooling element module like shown in Fig. 3 installed in an electrical machine;
- Figure 8. illustrates modules connected in parallel;
- Figure 9. illustrates modules connected in series and in parallel;
- Figure 10. illustrates a cross section view of a module with cross section triangular shaped pipes;
- Figure 11. illustrates a cross section view of a module with cross section semi-circular shaped pipes.

### Detailed description

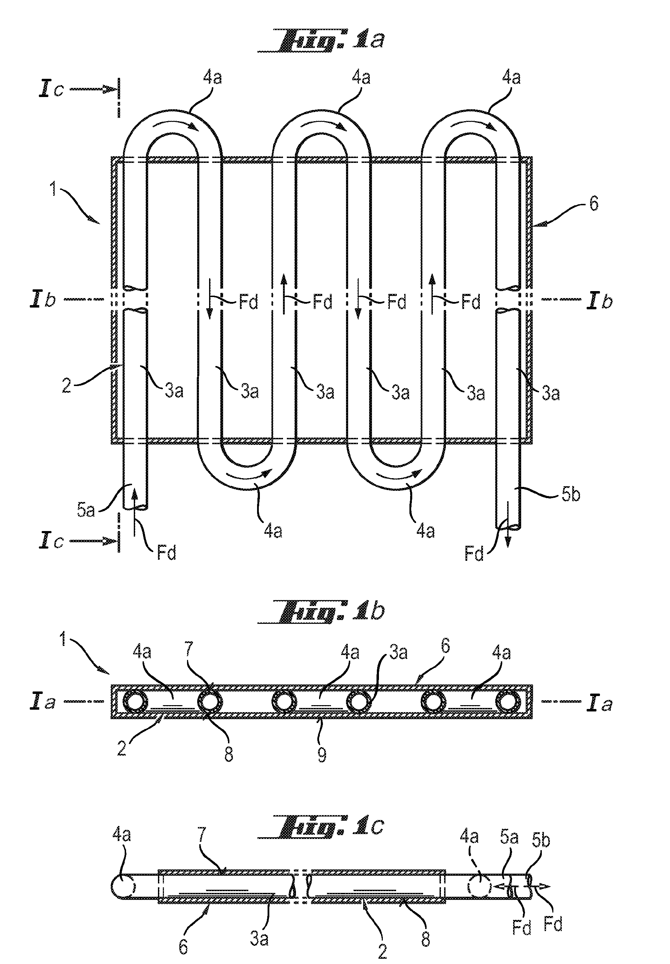

Figure 1.a) illustrates a cooling element module by plan section view, b) by cross section view and c) by side section view. The cooling element 1 in the figure comprises one module 2. The module 2 comprises straight adjacent pipes 3a parallel to each other, the ends of the pipes being joined by connecting parts 4a. The direction F_{d} of the cooling agent flow, for example water, changes in the connecting part 4a. The cooling agent flows in opposing directions F_{d} in adjacent pipes 3a.

Module 2 has an even number of pipes 3a. When a module is installed on the stator outer surface so that straight pipes 3a are substantially parallel to the longitudinal axis of the stator, the connections 5 a, 5b for the cooling agents are located at the same end of the stator. The module has two cooling agent connections, one connection 5a for cooling agent flowing into the module 2 and one connection 5b for returning cooling agent.

As leakage protection, a leakage catch casing 6 can be installed around the entire length of the pipes 3a of the module 2. The casing is in contact with the top 7 and bottom 8 surfaces of the module pipes 3a to minimize the required space and to improve the heat transfer capacity.

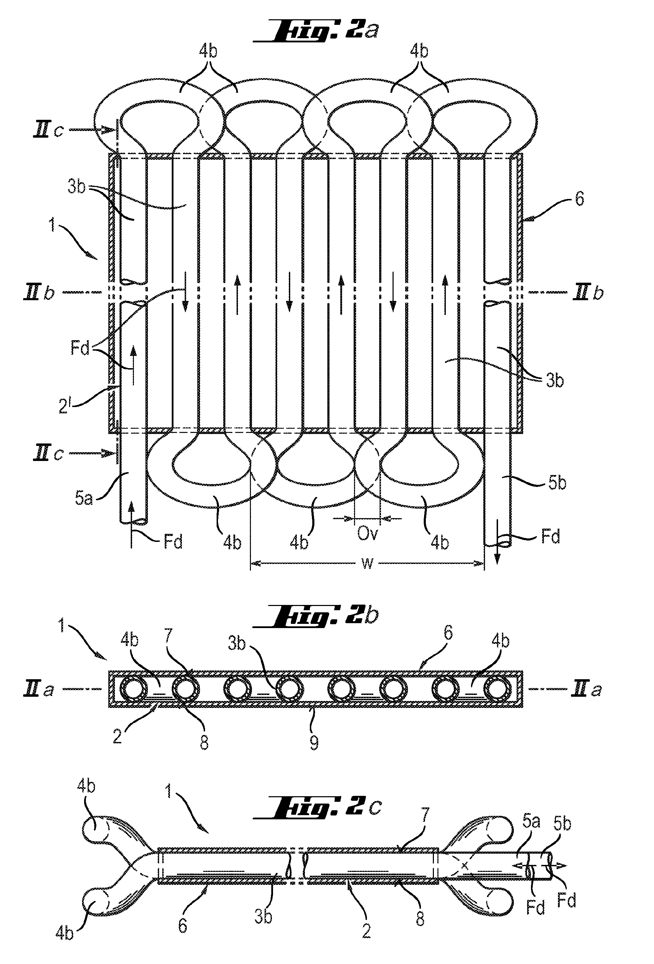

Figure 2. illustrates a cooling element module with an increased number of pipes Fig. 2.a) by plan section view, Fig. 2.b) by cross section view and Fig. 2.c) by side section view. The connecting parts 4b of a cooling element 1 module are bent alternately upwards and downwards in relation to the level of the straight pipes, and interlock. Two adjacent connecting parts may then partly overlap Oᵥ in a radial direction of the stator. Bending the connecting parts 4b allows the pipes 3b to be placed closer to each other, as more than four adjacent pipes can be placed for two connecting part widths w, depending on the overlap of the connecting parts.

The bending of connecting parts 4b is preferable, particularly if the connecting part is a curved pipe, as the minimum bending radius of the pipe will not set limitations for the pipe pitch.

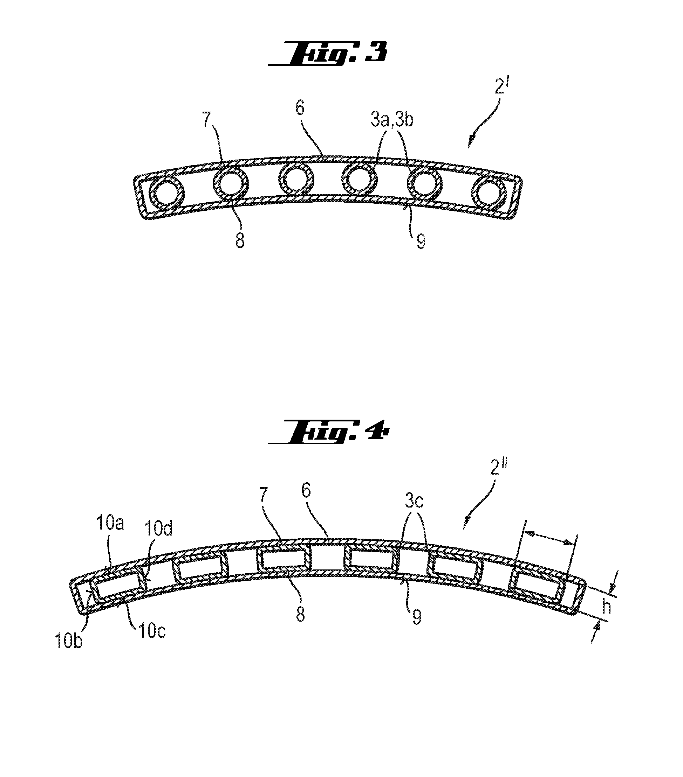

Figure 3. is a cross section view of a one-module cooling element 2'. In the figure 3, the shape of the bottom surface 8 of the module follows the shape of the outer surface of the cylindrical stator. The most efficient heat transfer from the stator outer surface to the pipe surfaces can be achieved by bending or pressing the cooling element, and its modules, to follow the shape of the stator outer surface.

Figure 3 includes the illustrating of the leakage catch casing 6. If a catch casing 6 is installed around the module 2', the shape of its bottom surface 9 will follow the shape of the outer surface of the cylindrical stator 26. The top and bottom surfaces 7, 8 of the module pipes 3a, 3b are in contact with the internal surface of the catch casing 6, and the outer surface 9 of the catch casing's bottom is in contact with the outer surface 14 of the stator. The module equipped with a leakage catch casing is preferably manufactured so that the pipes and the casing installed on their outer surface are formed as one structure to follow the shape of the stator surface.

Figure 4. is a partial illustration of a one-module cooling element 2" in which the pipe cross-section is not circular shaped. The cross-section of the cooling element module pipe 3c is substantially quadrangular with four sides 10a-d. The long side 10c of the pipe cross-section is against the bottom surface 9 of the module 2". This increases the contact surface between the module pipe and the stator outer surface. The quadrangular shape can be achieved for example by rolling the pipes flat, resulting in the width 1 of the pipe cross-section being greater than its height h.

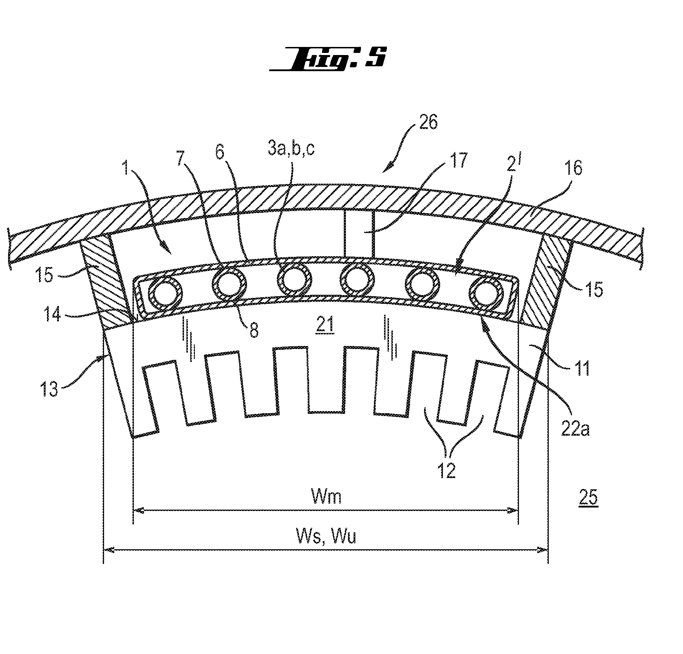

Figure 5. illustrates a cooling element installed in an electrical machine 25. The cooling element 1 is placed inside the electrical machine, on the outer surface 14 of the cylindrical stator 26. In Figure 5, the stator 26 comprises separate blocks 13 fastened to each other. The figure only shows one block 13 equal to the length of the entire stator. For a stator comprising blocks, at least one cooling element module 2 is placed on each block. Stator block 13 is manufactured of grooved 12 stator sheet segments 21 stacked on top of each other and fixed with connecting bars and a frame structure. A block 13 can also be manufactured several segments wide; the first sheet layer may, for example, comprise three segments and the second of a half-segment, two whole segments and another half-segment. For each layer, the location of the gaps between segments will be different from that of the previous layer.

The outermost part of the stator 26 forms the stator back 11, and there are grooves 12 in the internal part of the stator in which the windings are placed. One cooling element module 2 is used to cool the stator block 13. The module 2 is installed on the outer surface 14 of the stator back 11, in contact with the outer surface 14 between frame beams 15. The stator block 13 is supported against frame plate 16 using frame beams 15. Stator blocks 13 divide the stator outer surface 14 into sections 22a equal to the length of the stator. The width Wu of the outer surface section 14 is equal to the width Ws of the stator block 13. The width Wm of the module 2 is narrower than the width Ws of the stator block.

If the module 2 is enclosed by a catch casing 6, the top and bottom surfaces 7, 8 of the pipes 3a-e of module 2 are in contact with the catch casing 6, with the catch casing, in turn, in contact with the stator outer surface 14. This allows heat transfer with a metal to metal contact.

One stator block may have one or more cooling element modules, either side by side in the direction of the perimeter or consecutively in the longitudinal direction of the stator. The maximum width of one module is the width of the stator block 13.

The cooling element can be fixed to the outer surface 14 of the stator 26. In addition to utilizing the frame plate 16 or frame beams 15, other means of fixing the cooling element exist. For example, one or more tightening elements 17 can be installed between the frame plate and the cooling element.

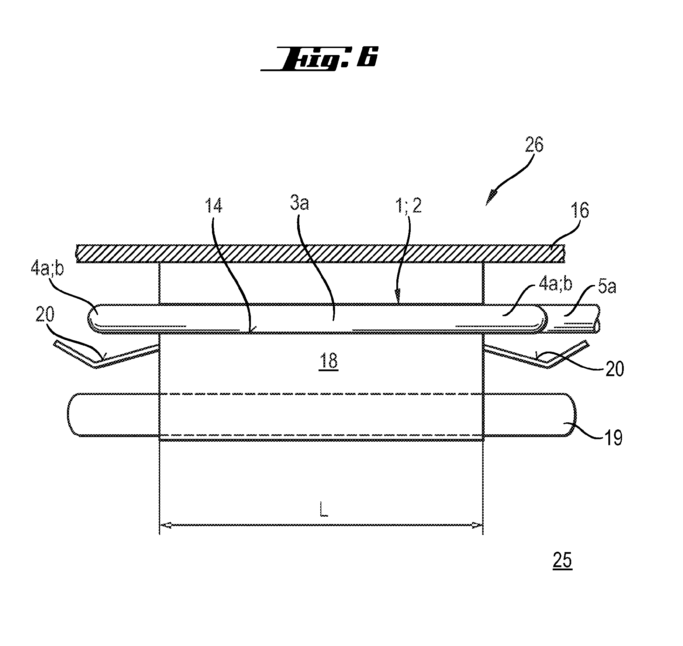

Figure 6. illustrates the cooling element installed in an electrical machine 25, seen from the side of the electrical machine. The entire length L of the stator 26 consists of thin sheets. The cooling element 1 is installed on the outer surface 14 of the stator core 18. A leakage catch basin 20 is installed between the connecting parts 4a, b of the cooling element 1 module and the stator coil ends 19.

The connecting parts 4a, b of the cooling element module 1 are open to the internal air circulation of the electrical machine 25, allowing direct contact between the air and the connecting parts. The cooling agent circulating in the cooling element will then also cool the air inside the electrical machine. If the electrical machine also has air cooling, the cooling element will provide additional cooling power to the air cooling system. In an electrical machine, air cooling is used to cool rotor losses and stator coil ends and, in non-permanently magnetized electrical machines, also to cool the rotor coil ends. Air cooling is usually performed by a fan installed separately or on the shaft of the electrical machine.

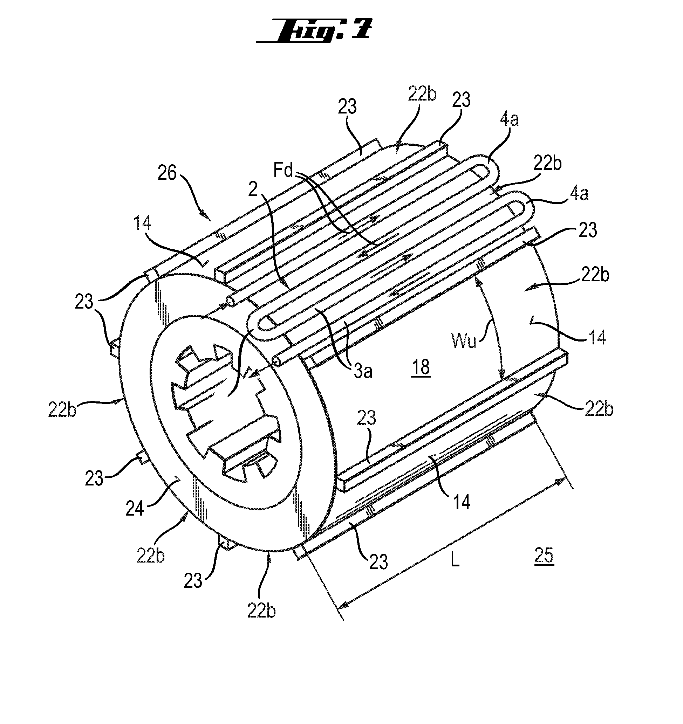

Figure 7. illustrates a cooling element module 2 installed in an electrical machine 25. The stator outer surface 14 is divided into sections 22b equal to the length of the stator using connecting bars 23. The stator, comprising sheets, is held together as a stator core 18 by the connecting bars 23. The length of the connecting bars 23 is equal to the length L of the stator core 18. The connecting bars 23 are placed on the outer perimeter 14 surface of the stator core 18 in a longitudinal direction to the stator core, and fixed on the sheets and/or the compression plates 24 on the stator ends. The connecting bars 23 maintain compression in the stator core 18. The cooling element module 2 is placed between two connecting bars 23 adjacent to each other in the circumferential direction.

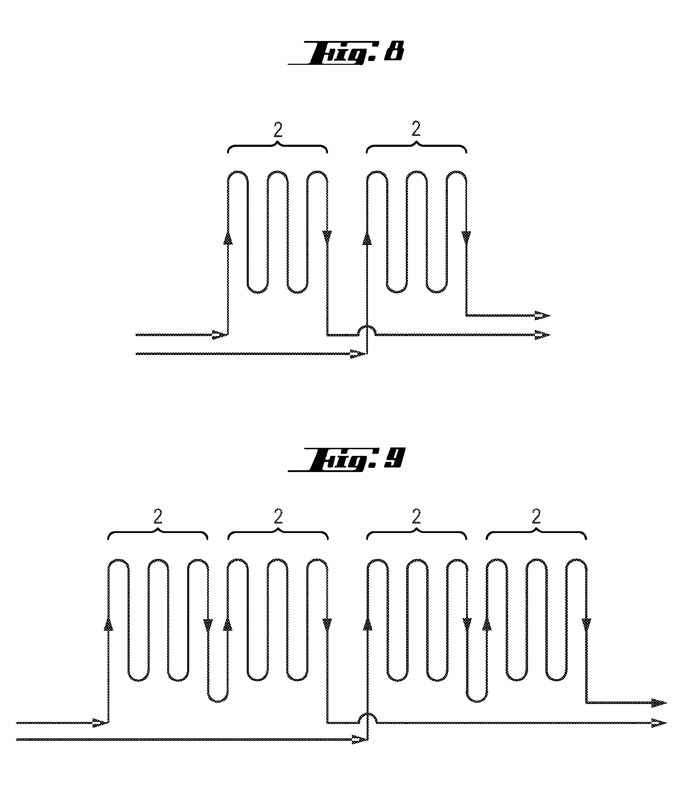

For simplicity, Figure 7. only illustrates one cooling element module 2 installed in an electrical machine 25. For the cooling of the stator, it is preferred that the outer surface 14 of the stator is evenly covered by stator cooling modules, with at least one module on each section 22b of the stator outer surface. Consequently, the cooling element surrounds the perimeter surface of the stator. For even cooling of the stator, it is not preferable to connect all cooling element modules 2 in a series. For example, a parallel connection shown in Fig. 8 is preferred for a two-module cooling element, providing cooling agent of substantially equal temperature for both the first and the second module. If there are several modules, two adjacent modules can be connected in series and the following two, again, in series with each other; the module pairs thus created will be connected in parallel (Fig.9).

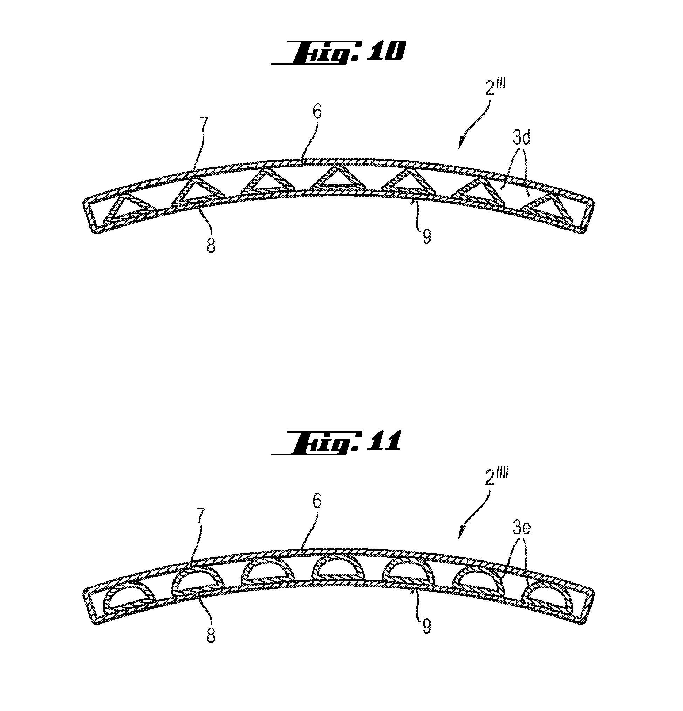

Figure 10. is a partial illustration of a one-module cooling element 2 in which the pipe cross-section is triangular. The cross-section of the cooling element module pipe 3d is substantially triangular. The longest side of the pipe cross-section is against the bottom surface 9 of the module 2'''.

Figure 11. is a partial illustration of a one-module cooling element 2 in which the pipe cross-section is semi-circular. The cross-section of the cooling element module pipe 3e is substantially semi-circular. The flat side of the pipe cross-section is against the bottom surface 9 of the module 2''''.

The invention has been described above with the help of certain embodiments. However, the description should not be considered as limiting the scope of patent protection; the embodiments of the invention may vary within the scope of the following claims.

Parts list: 1 cooling element; 2, 2', 2", 2''', 2'''' module; 3a-e pipe; 4a-b connecting part; 5 a, b connection; 6 leakage catch casing; 7 top surface; 8 bottom surface of 3a-e; 9 bottom surface of module 2, 2', 2", 2''', 2""; 10a-d side; 11 stator back; 12 stator groove; 13 stator block; 14 stator outer surface; 15 frame beam; 16 frame plate; 17 tightening element; 18 stator core; 19 coil ends; 20 leakage catch basin, 21 stator sheet segment, 22a, b outer surface section, 23 connecting bar; 24 compression plate; 25 electrical machine; 26 stator. F_{d} opposing direction flows; h pipe height; 1 pipe width; L stator length; Oᵥ overlapping area; w width; Wm module width; Ws stator block width, Wu outer surface section width.

## Claims

1. A cooling element for an electrical machine (25), the said electrical machine comprising a rotor and a stator, and in which electrical machine the stator (26) outer surface (14) is divided into sections (22a-b) equal to the length (L) of the stator, **characterized in that** the cooling element (1) comprises at least two modules (2), the said module (2) comprising adjacent pipes (3a-e) substantially parallel to the stator's longitudinal axis, the ends of the pipes being joined by connecting parts (4a-b), and the cooling agent flowing in opposing directions (F_{d}) in adjacent pipes, and the width (Wm) of the module (2) being equal to the width (Wu) of the outer surface section (22a-b) at most.

2. A cooling element according to Claim 1, **characterized in that** the module (2) has a top surface (7) and a bottom surface (8), and that the shape of the bottom surface (8) of the module follows the shape of the stator outer surface (14).

3. A cooling element according to Claim 1, **characterized in that** the module (2) can be installed in a thermally-conducting contact with the outer surface (14) of the stator (26).

4. A cooling element according to Claim 1, **characterized in that** the module (2) has an even number of pipes (3a-e).

5. A cooling element according to Claim 1, **characterized in that** the cross-section of the module pipe (3a-e) is quadrangular, triangular or semi-circular and that the longest side of the pipe's cross-section (10a-d) is against the bottom surface (8) of the module (2).

6. A cooling element according to Claim 1, **characterized in that** the connecting parts (4a-b) of the module are bent in a radial direction, and that two adjacent connecting parts (4a-b) partly overlap in the radial direction of the stator.

7. A cooling element according to Claim 1, **characterized in that** the modules (2) are connected in parallel.

8. A cooling element according to Claim 1, **characterized in that** the cooling element comprises a plurality of modules (2) and at least two of the modules (2) are connected in series and at least two of the modules are connected in parallel.

9. A cooling element according to Claim 1, **characterized in that** there is a leakage catch casing (6) around the module (2) for the entire length of the pipes (3a-e), and that the said catch casing (6) is substantially in contact with the top surface (7) and the bottom surface (8) of the module (2).

10. A cooling element according to Claim 1, **characterized in that** there is a leakage catch basin (20) between the module connecting parts (4a-b) and the stator coil ends (19).

11. A stator (26) for an electrical machine (25), in which stator (26) the outer surface (14) is divided into sections (22a-b) equal to the length (L) of the stator, and which stator is cooled by at least one cooling element (1), **characterized in that** the cooling element (1) comprises at least two modules (2), the said module (2) comprising adjacent pipes (3a-e) substantially parallel to the stator's longitudinal axis (L), the ends of the pipes being joined by connecting parts (4a-b), and the cooling agent flowing in opposing directions (F_{d}) in adjacent pipes, and the width (Wm) of the module (2) being equal to the width (Wu) of the outer surface section (22a-b) at most, and the module being located on the outer surface (14) of the stator.

12. A stator according to Claim 12, **characterized in that** there is at least one module (2) on each section (22a-b) of the stator outer surface.

13. A stator according to Claim 12, **characterized in that** the stator outer surface (14) is divided into sections (22a-b) equal to the length (L) of the stator using connecting bars (23).

14. A stator according to Claim 12, **characterized in that** the stator outer surface (14) is divided into sections (22a-b) equal to the length (L) of the stator by manufacturing the stator in blocks (13).

15. A stator according to Claim 12, **characterized in that** the stator is supported against the frame plate (16), and that there is at least one tightening element (17) between the frame plate (16) and the cooling element (1).

16. A stator according to Claim 12, **characterized in that** at least two cooling elements (1) are used to cool the stator, and that the said cooling elements (1) are installed consequently in the longitudinal direction of the stator.
